# EUROPÄISCHE PATENTSCHRIFT

(11) **EP 2 520 389 B1**
(45) Veröffentlichungstag und Bekanntmachung des Hinweises auf die Patenterteilung: **01.06.2016**
(21) Anmeldenummer: 12166630.9
(22) Anmeldetag: 03.05.2012
(51) Int. Cl.: B23D 61/12

(54) **Sägeblatt zum Sägen von Hohl- und Formprofilen**
Saw blade for sawing hollow profiles and form profiles
Lame de scie destinée à scier des profils creux et moulés

(30) Priorität: 06.05.2011 DE 102011050168
(43) Veröffentlichungstag der Anmeldung: 07.11.2012
(73) Patentinhaber: WIKUS-Sägenfabrik Wilhelm H. Kullmann GmbH & Co. KG, 34286 Spangenberg (DE)
(72) Erfinder: Kullmann, Dr. Jörg H., 34286 Spangenberg (DE); Gleim, Dr. Patrick, 34576 Homberg/Efze (DE); Hentschel, Martin, 34286 Spangenberg (DE)
(74) Vertreter: REHBERG HÜPPE + PARTNER

(56) Entgegenhaltungen:
- EP-A1- 1 808 250
- EP-A2- 2 060 355
- FR-A1- 2 841 806
- JP-A- 2000 263 327
- US-B2- 6 520 722

## Beschreibung

### TECHNISCHES GEBIET DER ERFINDUNG

Die Erfindung betrifft ein Sägeblatt zum Sägen von Hohl- und/oder Formprofilen. Das Sägeblatt weist einen Grundkörper und eine Mehrzahl von an den Grundkörper anschließenden Zähnen mit jeweils einer Schneide auf. Die Zähne werden durch an dem Grundkörper angeordnete Vorsprünge gebildet, an denen jeweils ein Einsatz aus einem Material befestigt ist, das härter als das Material der Vorsprünge und des Grundkörpers ist. Zumindest ein Teil der Zähne ist in einer sich entlang des Grundkörpers wiederholenden Gruppe aus mindestens drei ungeschränkten Zähnen angeordnet.

Derartige Sägeblätter können insbesondere als langgestrecktes Sägeband mit einer linearen Anordnung der Zähne hintereinander, als Bügelsägeblatt oder auch als Kreissägeblatt ausgebildet sein. Der Grundkörpers besteht aus Metall und die Zähne bestehen bevorzugt mindestens teilweise aus Hartmetall oder Hartmetalleinsätzen, wodurch sich das Sägeblatt besonders gut zum Sägen von Metallwerkstoffen eignet.

### STAND DER TECHNIK

Ein Sägeblatt mit einem Grundkörper und einer Mehrzahl von an den Grundkörper anschließenden Zähnen mit einer Schneide ist aus der deutschen Patentanmeldung DE 42 00 423 A1 bekannt. Die Zähne sind in einer sich entlang des Grundkörpers wiederholenden Gruppe angeordnet, wobei die Gruppe mindestens drei ungeschränkte gefaste Zähne mit unterschiedlichen Breiten und Höhen aufweist. Alle Zähne in der Gruppe besitzen jeweils zwei Fasen, die symmetrisch zur Längsmittelebene des Sägeblatts verlaufen. Durch diese spezielle Gruppentechnik mit ungeschränkten Zähnen ergibt sich eine besonders hohe Schnittleistung bei einem stabilisierten Geradlauf ohne Gefahr des seitlichen Verlaufens des Sägeblatts, wodurch sich das Sägeblatt von bekannten Sägeblättern mit geschränkten Zähnen oder solchen gemäß der Vor- und Nachschneidetechnik deutlich abgrenzt.

Ein weiteres vergleichbares Sägeblatt ist aus der deutschen Patentanmeldung DE 43 00 622 A1 bekannt.

Ein Sägeblatt mit einem Grundkörper und einer Mehrzahl von an den Grundkörper anschließenden Zähnen mit einer Schneide ist weiterhin aus der deutschen Patentanmeldung DE 100 30 168 A1 bekannt. Die Zähne sind abwechselnd ungeschränkt, nach links geschränkt und nach rechts geschränkt ausgebildet. In diesem Sinne weisen alle Zähne - oder zumindest die geschränkten Zähne - gleiche Breiten und Höhen auf.

Ein Sägeblatt mit einem Grundkörper und einer Mehrzahl von an den Grundkörper anschließenden Zähnen mit einer Schneide ist aus dem US-Patent US 6,520,722 B2 bekannt. Ein Teil der Zähne weist symmetrisch ausgebildete Fasen auf. Ein anderer Teil der Zähne weist asymmetrisch ausgebildete Fasen auf, wobei diese unterschiedliche Längen, aber immer denselben Fasenwinkel besitzen.

Ein Kreissägeblatt mit einem Grundkörper und einer Mehrzahl von an den Grundkörper anschließenden Zähnen mit jeweils einer Schneide ist aus der französischen Patentanmeldung FR 2 841 806 A1 bekannt. Ein Teil der Zähne weist symmetrisch ausgebildete Fasen auf. Ein anderer Teil der Zähne weist asymmetrisch ausgebildete Fasen auf, wobei diese unmittelbar ineinander übergehen.

Ein Sägeblatt mit einem Grundkörper und einer Mehrzahl von an den Grundkörper anschließenden Zähnen mit einer Schneide ist aus der japanischen Patentanmeldung JP 2000 263327 bekannt. Ein Teil der Zähne weist symmetrisch ausgebildete Fasen auf. Ein anderer Teil der Zähne weist asymmetrisch ausgebildete Fasen auf.

Ein Sägeblatt mit einem Grundkörper und einer Mehrzahl von an den Grundkörper anschließenden Zähnen mit einer Schneide ist aus der europäischen Patentanmeldung EP 1 808 250 A1 bekannt. Eine Verschleißschutzschicht erstreckt sich über die Schneide der Zähne des Sägeblatts.

### AUFGABE DER ERFINDUNG

Der Erfindung liegt die Aufgabe zugrunde, ein Sägeblatt bereitzustellen, welches sich besonders gut zum Sägen von Hohl- und Formprofilen, insbesondere aus Metall, eignet.

### LÖSUNG

Die Aufgabe der Erfindung wird erfindungsgemäß mit den Merkmalen des unabhängigen Patentanspruchs gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft ein Sägeblatt mit den Merkmalen des Anspruchs 1.

Der erste Fasenwinkel des zweiten Zahns kann dabei - muss aber nicht - gleich dem zweiten Fasenwinkel des dritten Zahns sein. Der zweite Fasenwinkel des zweiten Zahns kann - muss aber nicht - gleich dem ersten Fasenwinkel des dritten Zahns sein.

### Definitionen

Die Zähne des erfindungsgemäßen Sägeblatts sind im Sinne einer speziellen Form der Gruppentechnik ausgebildet und angeordnet, gemäß welcher die Gruppe mindestens drei Zähne aufweist. Die Gruppe wiederholt sich entlang der Länge des Sägeblatts, ggf. unter Zwischenanordnung anderer Zähne. Eine solche spezielle Gruppentechnik ist von der so genannten Vor- und Nachschneidetechnik und auch der einfachen sich wiederholenden Anordnung mit einem ungeschränkten Zahn, einem nach links geschränkten Zahn und einem nach rechts geschränkten Zahn zu unterscheiden.

Die Bezeichnung der Zähne im Sinne von "erster Zahn", "zweiter Zahn" usw. dient zunächst lediglich zur Unterscheidung der Zähne und besagt nicht zwangsläufig, in welcher Reihenfolge sie an dem Sägeblatt angeordnet sind. Eine Möglichkeit ist es allerdings, dass die Zähne genau in dieser Reihenfolge - ggf. unter Zwischenanordnung weiterer Zähne - angeordnet sind.

Durch seine besondere Geometrie eignet sich das neue Sägeblatt besonders gut zum Sägen von Hohl- oder Formprofilen, insbesondere aus Metall. Dies bedeutet jedoch nicht, dass das Sägen anderer Werkstücke nicht ebenfalls möglich ist. Die Zähne des Sägeblatts sind so gestaltet, dass sie zum Zerspanen von beliebigen Profilen - z. B. im Einzel-, Lagen oder Bündelschnitt - und insbesondere von als Hohl- und/oder Formprofil ausgebildeten Stahlträger gut geeignet sind.

Das Sägeblatt kann insbesondere als langgestrecktes Sägeband mit einer linearen Anordnung der Zähne hintereinander, als Bügelsägeblatt oder auch als Kreissägeblatt ausgebildet sein.

### Weitere Beschreibung

Im Gegensatz zu einem Sägeblatt mit ungeschränkten symmetrisch gefasten Zähnen in der Gruppe hat die neue Zahngeometrie des Sägeblatts beim Sägen von Hohl- oder Formprofilen den Vorteil, dass aufgrund der unterschiedlich angebrachten Fasen an einem Teil der Zähne der Grat beim Durchtritt bzw. Austritt des Sägeblatts aus dem Schnittkanal im Werkstück sauber und gleichmäßig abgetrennt wird.

Der für das wirksame Schneiden des Sägeblatts erforderliche Freischnitt wird also über eine besondere Art des Schliffs der Fasen der Zähne und somit deren Schneiden bewirkt.

Nachteil eines im Stand der Technik durch eine Schränkung hervorgerufenen Zahnüberstands ist es, dass es aufgrund der Schränkungstoleranzen zu ungleichmäßigen Zahnüberständen kommt und hierdurch der Schnittkanal unterschiedlich ausgeprägt sein und es zu gratbehafteten Schnitten kommen kann. Die Aufteilung des zu zerspanenden Volumens und die Verteilung der Schnittkräfte auf die Zähne erfolgt unterschiedlich. Dies kann zur Folge haben, dass der gewünschte Gerädeauslauf des Sägeblatts gestört wird. Hierdurch ergibt sich auch eine reduzierte Güte der gesägten Oberfläche. Weiterhin wird der Grundkörper des Sägeblatts durch eine Schränkung durch die Auslenkung aus der Längsmittelebene geschwächt, so dass die bei einer Zerspanung mit hohen Schnittleistungen entstehenden hohen Kräfte nicht auf den Grundkörper übertragen werden können und zu Zahnausbrüchen bzw. einem Bruch des Trägermaterials führen können.

Im Vergleich dazu weist das erfindungsgemäße Sägeblatt eine Reihe von Vorteilen auf. Die Zähne bzw. deren Schneiden sind so ausgebildet, dass ein sehr gratarmer und vibrationsfreier Schnitt beim Sägen erreicht wird. Hierdurch werden Nacharbeiten an dem gesägten Wertstück vermieden bzw. reduziert. Um einen sehr gleichmäßig breiten Schnittkanal zu erreichen und Abweichungen zu vermeiden, sind die Zähne nicht geschränkt. Stattdessen weist ein Teil der Zähne einen asymmetrischen Schliff auf, wodurch es möglich ist, sehr genaue Schnitte (d. h. mit geringen Formabweichungen) und gratarme Schnitte zu realisieren und eine glatte und saubere geschnittene Oberfläche auch über eine lange Einsatzdauer des Sägeblatts zu gewährleisten. Die Herstellung des neuen Sägeblatts ist im Vergleich zu geschränkten Sägeblättern preisgünstiger, da der zusätzliche Arbeitsschritt des Schränkens entfällt.

Hinsichtlich der Anordnung bzw. Reihenfolge der Zähne bestehen viele Möglichkeiten. Um die Schwingungsempfindlichkeit des Sägeblatts zu verbessern, kann die Zahnteilung - d. h. der Abstand zwischen zwei benachbarten Zähnen - variiert und z. B. uneinheitlich bzw. unregelmäßig ausgebildet sein.

Die Zähne besitzen vorzugsweise einen positiven Spanwinkel, und insbesondere einen Spänwinkel im Bereich von etwa 1° bis 20°, insbesondere von etwa 10°.

Die Zähne können unterschiedliche Breiten und vorzugsweise auch unterschiedliche Höhen aufweisen. Dabei weist insbesondere der höchste Zahn die geringste Breite und der niedrigste Zahn die größte Breite auf. Eine solche Anordnung wird auch als Breiten- und Höhenstufung bezeichnet. Jedem Zahn ist somit ein bestimmter Teil des Schnittkanals zugeordnet. Die Höhe des symmetrischen ersten Zahns kann zwischen 0,02 mm und 0,2 mm, insbesondere etwa 0,03 mm, größer als die Höhe des asymmetrischen zweiten und dritten Zahns sein. Der Fasenwinkel des symmetrischen ersten Zahns liegt in einem Bereich zwischen 20° und 60°, insbesondere bei etwa 45°. Die asymmetrischen Zähne weisen Fasenwinkel von zwischen 5° und 45° auf, wobei die Fasenwinkel insgesamt so aufeinander abgestimmt sind, dass die während des Sägens auf die Zähne wirkenden Belastungen in etwa gleichmäßig verteilt sind. Aufgrund der oberhalb beschriebenen Fasenwinkel entsteht eine sehr stabile Ecke des jeweiligen Zahns.

Die Zahngruppe kann einen oder mehrere weitere ungeschränkte gefaste Zähne aufweisen. Dazu gehört ein fünfter Zahn, der zwei Fasen besitzt, die asymmetrisch zur Längsmittelebene des Sägeblatts verlaufen, wobei sich die erste Fase in der ersten Richtung von der Längsmittelebene erstreckt und einen ersten Fasenwinkel besitzt und sich die zweite Fase in einer anderen zweiten Richtung von der Längsmittelebene erstreckt und einen kleineren zweiten Fasenwinkel besitzt. Ein sechster Zahn besitzt zwei Fasen, die asymmetrisch zur Längsmittelebene des Sägeblatts verlaufen, wobei sich die erste Fase in der ersten Richtung von der Längsmittelebene erstreckt und einen ersten Fasenwinkel besitzt und sich die zweite Fase in der anderen zweiten Richtung von der Längsmittelebene erstreckt und einen größeren zweiten Fasenwinkel besitzt.

Durch die Erhöhung der Anzahl der ungeschränkten asymmetrisch gefasten Zähne - ggf. unter Anordnung weiterer symmetrisch gefaster Zähne - werden die im Schnittkanal durch den jeweiligen Zahn zu sägenden Bereiche weiter verkleinert, so dass die Schnittkräfte gleichmäßiger verteilt werden, geringere Kräfte auf den jeweiligen Zahn einwirken und die Qualität der gesägten Oberfläche weiter verbessert wird. Dies wird auch durch eine geschickte Anpassung und Abstimmung der Fasenwinkel aufeinander erreicht. In der Gruppe existieren ungeschränkte asymmetrisch gefaste Zähne, deren Fasenwinkel in genau umgekehrter Anordnung an einem anderen Zahn vorhanden sind. Anders gesagt besitzt ein erster Zahn einen ersten Fasenwinkel im linken Bereich seiner Schneide und einen anderen zweiten Fasenwinkel im rechten Bereich seiner Schneide, während ein anderer zweiter Zahn den zweiten Fasenwinkel im linken Bereich seiner Schneide und den ersten Fasenwinkel im rechten Bereich seiner Schneide aufweist. Die mehreren ungeschränkten symmetrisch gefasten Zähne weisen vorzugsweise übereinstimmende Fasenwinkel - insbesondere von etwa 45° - auf, und besitzen unterschiedliche Höhen und/oder Breiten.

Das Sägeblatt ist als hartmetallbestücktes Sägeblatt mit Einsätzen ausgebildet, die an Vorsprüngen des Grundkörpers befestigt sind. Diese Hartmetalleinsätze bewirken, dass die erhöhte Härte und Verschleißfestigkeit beim Einsatz des Sägeblatts im Vergleich zu Schnellarbeitsstahl (HSS) erreicht wird. Die Einsätze sind als Formkörper ausgebildet, die als separate Elemente hergestellt und anschließend dauerhaft mit dem Grundkörper - insbesondere durch Schweißen oder Löten - verbunden werden.

Die Zähne des Sägeblatts weisen Schneiden mit geometrisch bestimmter Schneidenform auf (im Unterschied zu Schneiden mit geometrisch unbestimmter Schneidenform; vgl. DIN 8580). Die Schneide des Sägeblatts besteht vorzugsweise aus Hartmetall, also insbesondere einem Stahl, der mit Wolfram und/oder Kobalt legiert ist. Dabei ist Wolfram der eigentliche Hartstoff und Kobalt - sowie ggf. andere Legierungselemente - der Binder. Es können aber auch z. B. Hochleistungsschnellarbeitsstähle (HSS) Verwendung finden.

Für eine weitere Steigerung der Härte und Verschleißfestigkeit kann das Sägeblatt zumindest teilweise mit einer Verschleißschutzschicht versehen sein. Die Verschleißschutzschicht erstreckt sich dabei mindestens über die Schneidkante der Schneide, wobei die Schneide ggf. vorher einer Verrundung unterzogen wurde, um eine bessere Haftung der Verschleißschutzschicht zu gewährleisten. Die Verschleißschutzschicht erbringt insbesondere eine höhere Härte und damit einen verbesserten Widerstand gegen Abrasion beim Sägen, wodurch die Standzeit des Sägeblatts erhöht wird. Weiterhin ist es möglich, dass der Reibungskoeffizient der Verschleißschutzschicht relativ gering gewählt wird, um einen guten Abfluss der Späne beim Sägen und eine geringe Erwärmung des Sägeblatts zu bewirken. Gleichzeitig erfolgt dadurch im Vergleich zu Sägebändern ohne Verschleißschutzschicht eine Reduzierung der Schnittkräfte.

Die Verschleißschutzschicht kann aus Hartstoff bestehen. Darunter sind insbesondere TiN, TiCN, TiAlN, CrN und DLC zu verstehen. Die Verschleißschutzschicht kann ein- oder mehrschichtig aufgebaut sein. Bei einem einschichtigen Aufbau besteht die Verschleißschutzschicht insbesondere aus TiN, TiCN, TiAlN oder CrN. Auch mehrere unterschiedliche Schichten - z. B. 2, 3 oder 4 Schichten - können insgesamt die Verschleißschutzschicht bilden. Bei einem solchen mehrschichtigen Aufbau besteht die mindestens eine Zwischenschicht insbesondere aus TiN, TiCN, TiAlN oder CrN und die auf der Zwischenschicht angeordnete Oberflächenschicht insbesondere aus DLC. Die Verschleißschutzschicht wird vorzugsweise durch physikalische Gasphasenabscheidung (PVD) aufgebracht. Dies gilt bei einem mehrschichtigen Aufbau sowohl für die Oberflächenschicht als auch für mindestens eine Zwischenschicht.

Die Zähne können sehr unterschiedliche Ausbildungen bezüglich ihrer Breiten, ihrer Fasenwinkel und der Länge der Fasen besitzen. So kann z. B. zumindest ein Teil der Zähne - und insbesondere der so genannte Führungszahn - so ausgebildet sein, dass er nicht breiter als der. Grundkörper des Sägeblatts ist. Dies wird z. B. durch einen vergleichsweise großen Fasenwinkel erreicht. Ein solcher Zahn besitzt dann die Breite Null innerhalb der Gruppe von Zähnen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den abhängigen Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Schneide die Rede ist, ist dies so zu verstehen, dass genau eine Schneide, zwei Schneiden oder mehr Schneiden vorhanden sind. Wenn hingegen nur die genaue Anzahl eines Merkmals angegeben werden soll, findet das Adjektiv "genau" vor dem jeweiligen Merkmal Verwendung.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Seitenansicht eines Ausschnitts einer ersten beispielhaften Ausführungsform des neuen Sägeblatts in einer schematischen Darstellung.
- **Fig. 2**: zeigt eine Ansicht von oben auf das Sägeblatt gemäß Fig. 1.
- **Fig. 3**: zeigt das Sägeblatt gemäß Fig. 1 in einer Ansicht von vorne.
- **Fig. 4**: zeigt vergrößerte Ansichten beispielhafter Ausführungsformen der Zähne des neuen Sägeblatts gemäß Fig. 1 von vorne.

### FIGURENBESCHREIBUNG

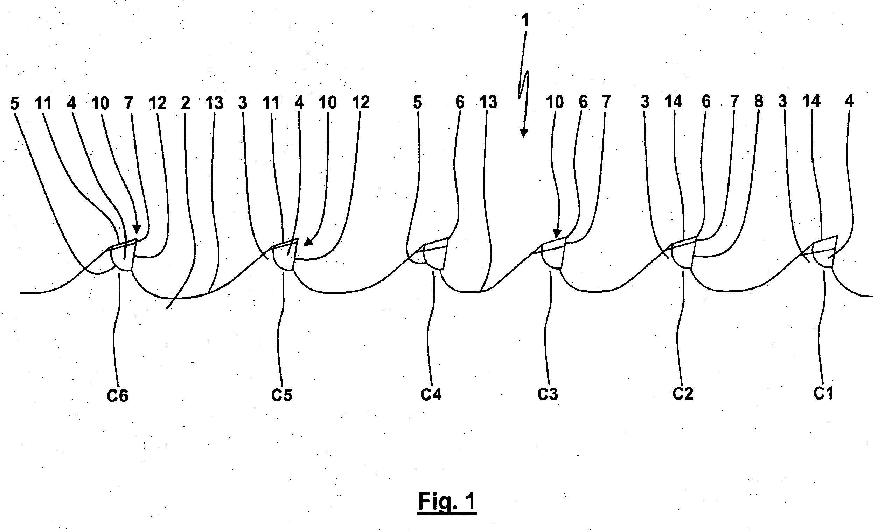

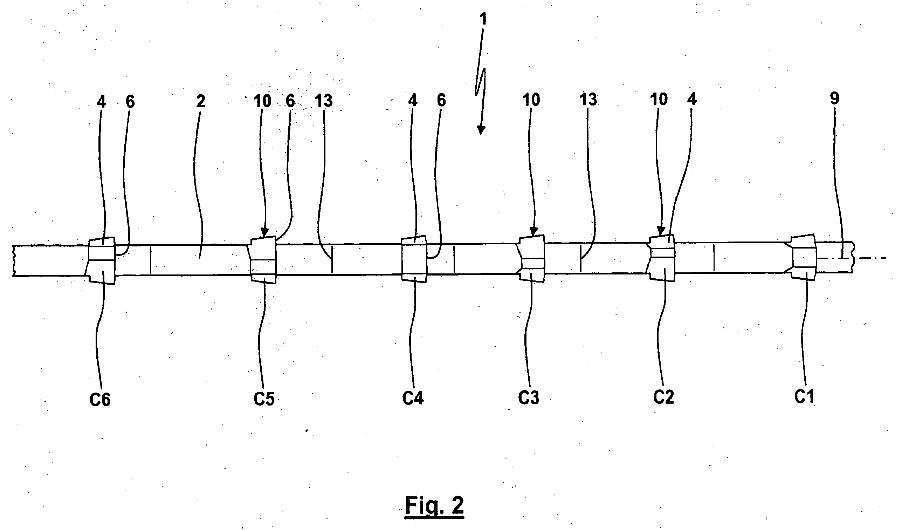

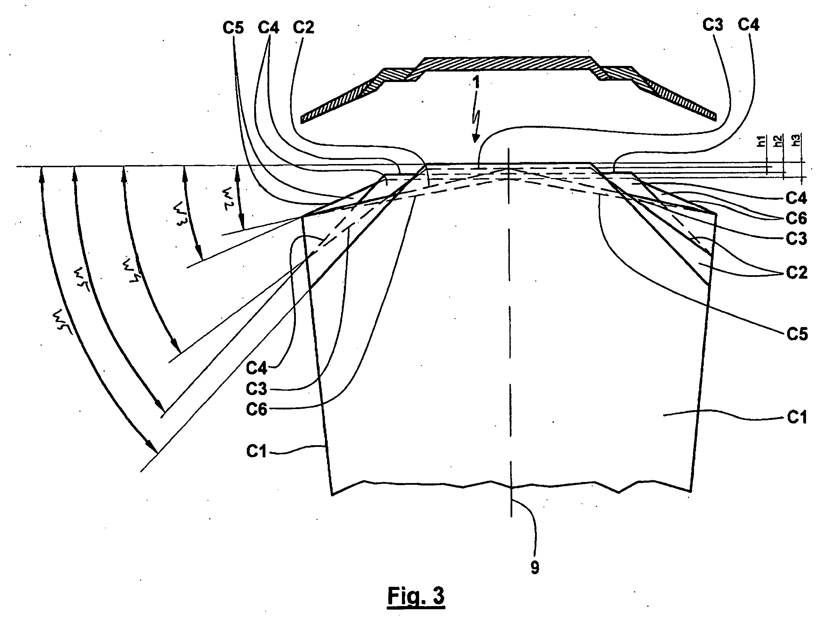

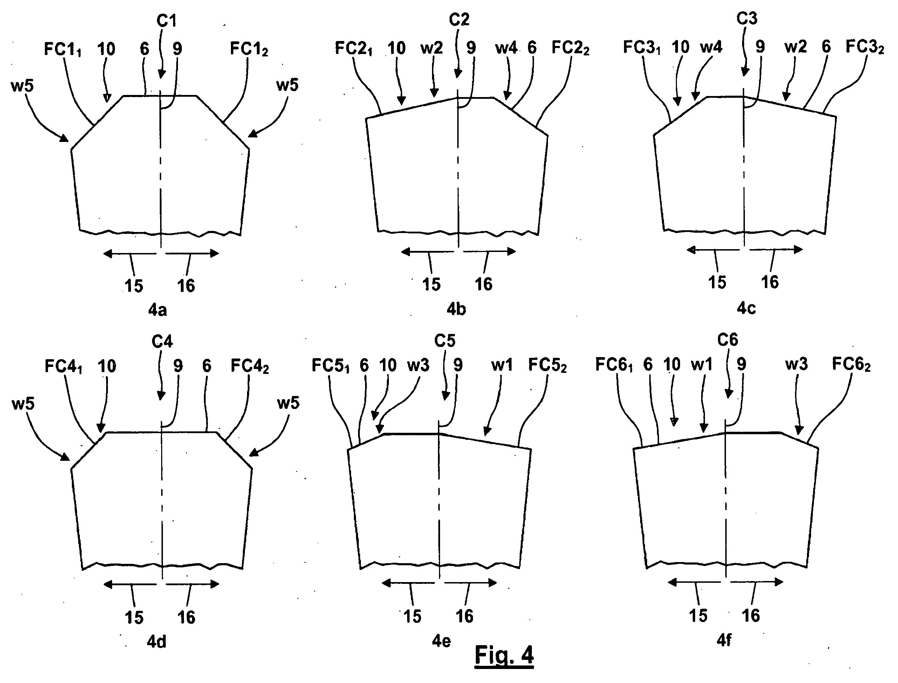

**Fig. 1** zeigt eine Seitenansicht einer ersten beispielhaften Ausführungsform des neuen Sägeblatts 1. **Fig. 2** zeigt die zugehörige Draufsicht auf das Sägeblatt 1. Weitere Ansichten des in Fig. 1 und 2 gezeigten Sägeblatts 1 bzw. dessen Bestandteile sind in den **Fig. 3** und **4** dargestellt. Die Figuren 4a bis 4f zeigen dabei die sechs Zähne 10 des Sägeblatts 1 gemäß Fig. 3 einzeln.

Im Folgenden wird zur Beschreibung des Sägeblatts 1 auf die Fig. 1-4 Bezug genommen.

Es versteht sich, dass Fig. 1 und 2 nur einen Ausschnitt aus dem Sägeblatt 1 zeigen, welches sich in der Darstellung der Fig. 1 und 2 sowohl nach links und rechts als auch nach unten weiter erstreckt. In Fig. 1 und 2 ist das Sägeblatt 1 als langgestrecktes Sägeband mit einer Längsmittelebene 9 ausgebildet. Die Längsmittelebene 9 erstreckt sich mittig entlang der Länge des Sägeblatts 1, wie dies durch die Zusammenschau der Fig. 2 und 3 (siehe jeweils Bezugszeichen 9) nachvollziehbar ist. Bei dem Sägeblatt 1 könnte es sich jedoch auch um ein Kreissägeblatt oder ein weniger langgestrecktes Bügelsägeblatt handeln. Das Sägeblatt 1 selbst besteht aus Metall und dient zum Sägen von Metall.

Das Sägeblatt 1 weist einen Grundkörper 2 auf, von dem nur ein Ausschnitt sichtbar ist. Der Grundkörper 2 ist (vorzugsweise einstückig) mit einer Mehrzahl von Vorsprüngen 3 verbunden, an denen jeweils ein Einsatz 4 befestigt ist. Der Einsatz 4 besteht aus einem Material, das härter als das Material der Vorsprünge 3 und des Grundkörpers 2 des Sägeblatts 1 ist. Vorzugsweise handelt es sich bei dem Material des Einsatzes 4 um Hartmetall. Zwischen dem Vorsprung 3 und dem Einsatz 4 ist eine Fügefläche 5 vorhanden, an der der Einsatz 4 mit dem Vorsprung 3 - insbesondere durch Löten oder Schweißen - fest verbunden ist. Das Sägeblatt 1 ist nicht im Maßstab 1:1 dargestellt, sondern so, dass die Einsätze 4 gut erkennbar sind. Die Einsätze 4 sind im Vergleich zu den Vorsprüngen 3 tatsächlich deutlich kleiner.

Der Vorsprung 3 mit dem Einsatz 4 bildet einen Zahn 10 mit einer Schneide 6 und einer Spanbildungsfläche 7. Weiterhin weist jeder Zahn 10 einen Zahnrücken 11, eine Zahnbrust 12, einen Zahngrund 13 und eine Freifläche 14 auf.

Zumindest ein Teil der Zähne 10 ist in einer sich entlang des Grundkörpers 2 wiederholenden Gruppe angeordnet, wobei die Gruppe mindestens drei ungeschränkte gefaste Zähne 10 aufweist. Im oberen Bereich von Fig. 3 ist zur Verdeutlichung durch die Schraffierung die besondere Aufteilung der wirksamen Schneidenabschnitte auf mehrere Zähne 10 dargestellt, die so jeweils einem bestimmten streifenförmigen Teil des Schnittkanals zugeordnet sind und nur dort Späne abnehmen.

Wie besonders gut in Fig. 3 und 4 erkennbar ist, weist die Gruppe im vorliegenden Beispiel sechs unterschiedliche Zähne C1, C2, C3, C4, C5 und C6 auf. Es existieren links und rechts insgesamt fünf verschiedene Fasenwinkel w1, w2, w3, w4 und w5 wobei diese aus Gründen der Übersichtlichkeit nur auf der linken Seite in Fig. 3 eingezeichnet sind. Sie existieren jedoch auch - teilweise an anderen Zähnen 10 - auf der rechten Seite der Abbildung.

Bei dem ersten Zahn C1 handelt es sich um den höchsten und schmalsten Zahn 10, den so genannten Führungszahn. Der erste Zahn C1 in der Gruppe besitzt zwei Fasen FC1, und FC1₂, die unter einem Fasenwinkel w5 symmetrisch zur Längsmittelebene 9 des Sägeblatts 1 verlaufen.

Ein zweiter Zahn C2 in der Gruppe besitzt zwei Fasen FC2₁ und FC2₂, die asymmetrisch zur Längsmittelebene 9 des Sägeblatts 1 verlaufen, wobei sich die erste Fase FC2₁ in einer ersten Richtung 15 von der Längsmittelebene 9 erstreckt und einen ersten Fasenwinkel w2 besitzt und sich die zweite Fase FC2₂ in einer anderen zweiten Richtung 16 von der Längsmittelebene 9 erstreckt und einen größeren zweiten Fasenwinkel w4 besitzt.

Ein dritter Zahn C3 in der Gruppe besitzt zwei Fasen FC3₁ und FC3₂, die asymmetrisch zur Längsmittelebene 9 des Sägeblatts 1 verlaufen, wobei sich die erste Fase FC3₁ in der ersten Richtung 15 von der Längsmittelebene 9 erstreckt und den ersten Fasenwinkel w4 besitzt und sich die zweite Fase FC3₂ in der anderen zweiten Richtung 16 von der Längsmittelebene 9 erstreckt und den kleineren zweiten Fasenwinkel w2 besitzt.

Ein vierter Zahn C4 in der Gruppe besitzt zwei Fasen FC4₁ und FC4₂, die unter dem Fasenwinkel w5 symmetrisch zur Längsmittelebene 9 des Sägeblatts 1 verlaufen.

Ein fünfter Zahn C5 in der Gruppe besitzt zwei Fasen FC5₁ und FC5₂, die asymmetrisch zur Längsmittelebene 9 des Sägeblatts 1 verlaufen, wobei sich die erste Fase FC5₁ in der ersten Richtung 15 von der Längsmittelebene 9 erstreckt und einen Fasenwinkel w3 besitzt und sich die zweite Fase FC5₂ in der anderen zweiten Richtung 16 von der Längsmittelebene 9 erstreckt und einen kleineren zweiten Fasenwinkel w1 besitzt.

Ein sechster Zahn C6 in der Gruppe besitzt zwei Fasen FC6₁ und FC6₂, die asymmetrisch zur Längsmittelebene 9 des Sägeblatts 1 verlaufen, wobei sich die erste Fase FC6₁ in der ersten Richtung 15 von der Längsmittelebene 9 erstreckt und den Fasenwinkel w1 besitzt und sich die zweite Fase FC6₂ in der anderen zweiten Richtung 16 von der Längsmittelebene 9 erstreckt und den größeren zweiten Fasenwinkel w3 besitzt.

Mit einer derartigen Anordnung der Zähne 10 in dieser speziellen Gruppentechnik mit ungeschränkten Zähnen 10 und teilweise unterschiedlichen asymmetrischen Fasenwinkeln werden eine besonders gute Schnittleistung bei gutem Geradlauf des Sägeblatts 1, sehr genaue und gratarme Schnitte und eine glatte und saubere geschnittene Oberfläche auch über eine lange Einsatzdauer des Sägeblatts 1 beim Sägen von Hohl- oder Formprofilen erreicht.

In Fig. 3 sind weiterhin sind die Höhenunterschiede h1, h2 und h3 zwischen den Zähnen 10 eingezeichnet.

In dem dargestellten bevorzugten Ausführungsbeispiel liegen somit zusammengefasst die folgenden Werte vor:

| **Zahn** | **Höhendifferenz** | **Fasenwinkel 1** | **Fasenwinkel 2** |
|---|---|---|---|
| C1 | - | w5 | w5 |
| C2 | h1 | w2 | w4 |
| C3 | h1 | w4 | w2 |
| C4 | h2 | w5 | w5 |
| C5 | h3 | w3 | w1 |
| C6 | h3 | w1 | w3 |

Dabei kann Folgendes gelten:

| **Größe** | **Wertebereich 1** | **Wertebereich 2** | **bevorzugter Wert** |
|---|---|---|---|
| w1 | 5-25° | 5-15° | 9° |
| w2 | 5-25° | 8-20° | 12° |
| w3 | 10-30° | 15-30° | 22° |
| w4 | 20-50° | 30-40° | 35° |
| w5 | 20-60° | 40-50° | 45° |
| h1 | 0,01-0,3 mm | 0,02-0,2 mm | 0,03 mm |
| h2 | 0,02-0,6 mm | 0,04-0,4 mm | 0,06 mm |
| h3 | 0,03-0,9 mm | 0,06-0,6 mm | 0,09 mm |

Wie in Fig. 3 dargestellt ist, besteht bei diesem bevorzugten Beispiel die Gruppe aus der Zahnfolge C1-C2-C3-C4-C5-C6. Diese Gruppe wiederholt sich dann im weiteren Verlauf des Sägeblatts 1, wobei es auch möglich ist, andere Zähne 10 zwischenzuschalten und/oder die Anordnung der Gruppe zu variieren.

Weitere beispielhafte Möglichkeiten einer Anordnung sind die Zahnfolgen C1-C5-C6-C4-C2-C3, C1-C6-C5-C4-C2-C3, C1-C6-C5-C4-C3-C2 und C1-C5-C6-C4-C3-C2.

### BEZUGSZEICHENLISTE

- 1: Sägeblatt
- 2: Grundkörper
- 3: Vorsprung
- 4: Einsatz
- 5: Fügefläche
- 6: Schneide
- 7: Spanbildungsfläche
- 8: Spanumformelement
- 9: Längsmittelebene
- 10: Zahn
- 11: Zahnrücken
- 12: Zahnbrust
- 13: Zahngrund
- 14: Freifläche
- 15: erste Richtung
- 16: zweite Richtung

- C1: erster Zahn
- C2: zweiter Zahn
- C3: dritter Zahn
- C4: vierter Zahn
- C5: fünfter Zahn
- C6: sechster Zahn
- FC1₁: erste Fase des ersten Zahns
- FC1₂: zweite Fase des ersten Zahns
- FC2₁: erste Fase des zweiten Zahns
- FC2₂: zweite Fase des zweiten Zahns
- FC3₁: erste Fase des dritten Zahns
- FC3₂: zweite Fase des dritten Zahns
- FC4₁: erste Fase des vierten Zahns
- FC4₂: zweite Fase des vierten Zahns
- FC5₁: erste Fase des fünften Zahns
- FC5₂: zweite Fase des fünften Zahns
- FC6₁: erste Fase des sechsten Zahns
- FC6₂: zweite Fase des sechsten Zahns
- w1: erster Fasenwinkel
- w2: zweiter Fasenwinkel
- w3: dritter Fasenwinkel
- w4: vierter Fasenwinkel
- w5: fünfter Fasenwinkel

## Patentansprüche

1. Sägeblatt (1) zum Sägen von Hohl- und/oder Formprofilen, mit
einem Grundkörper (2), und
einer Mehrzahl von an den Grundkörper (2) anschließenden Zähnen (10) mit jeweils einer Schneide (6), wobei
die Zähne (10) durch an dem Grundkörper angeordnete Vorsprünge (3) gebildet werden, an denen jeweils ein Einsatz (4) aus einem Material befestigt ist, das härter als das Material der Vorsprünge (3) und des Grundkörpers (2) ist,
zumindest ein Teil der Zähne (10) in einer sich entlang des Grundkörpers (2) wiederholenden Gruppe aus mindestens drei ungeschränkten gefasten Zähnen (10) angeordnet ist,
ein erster Zahn (10) in der Gruppe zwei Fasen besitzt, wobei die Fasen symmetrisch zur Längsmittelebene (9) des Sägeblatts (1) verlaufen,
ein zweiter Zahn (10) in der Gruppe zwei Fasen besitzt, die asymmetrisch zur Längsmittelebene (9) des Sägeblatts (1) verlaufen, wobei sich die erste Fase in einer ersten Richtung (15) von der Längsmittelebene (9) erstreckt und einen ersten Fasenwinkel besitzt und sich die zweite Fase in einer anderen zweiten Richtung (16) von der Längsmittelebene (9) erstreckt und einen größeren zweiten Fasenwinkel besitzt,
ein dritter Zahn (10) in der Gruppe zwei Fasen besitzt, die asymmetrisch zur Längsmittelebene (9) des Sägeblatts (1) verlaufen, wobei sich die erste Fase in der ersten Richtung (15) von der Längsmittelebene (9) erstreckt und einen ersten Fasenwinkel besitzt und sich die zweite Fase in der anderen zweiten Richtung (16) von der Längsmittelebene (9) erstreckt und einen kleineren zweiten Fasenwinkel besitzt,
die erste Fase des zweiten Zahns (10) und die erste Fase des dritten Zahns (10) in der Ansicht des Sägeblatts (1) von vorne in einem gemeinsamen Punkt außen enden, und
die zweite Fase des zweiten Zahns (10) und die zweite Fase des dritten Zahns (10) in der Ansicht des Sägeblatts (1) von vorne in einem gemeinsamen Punkt außen enden.

2. Sägeblatt (1) nach Anspruch 1, **dadurch gekennzeichnet, dass**
der erste Fasenwinkel des zweiten Zahns (10) zwischen 5° und 25° liegt,
der zweite Fasenwinkel des zweiten Zahns (10) zwischen 20° und 50° liegt,
der erste Fasenwinkel des dritten Zahns (10) zwischen 20° und 50° liegt, und
der zweite Fasenwinkel des dritten Zahns (10) zwischen 5° und 25° liegt.

3. Sägeblatt (1) nach Anspruch 1 oder 2, **dadurch gekennzeichnet, dass** der erste Zahn (10) einen Fasenwinkel besitzt, der zwischen 20° und 60°, insbesondere bei etwa 45°, liegt.

4. Sägeblatt (1) nach Anspruch 1, **dadurch gekennzeichnet, dass** der erste Zahn (10) eine erste Höhe, der zweite Zahn (10) eine zweite Höhe und der dritte Zahn (10) eine dritte Höhe aufweist, wobei die erste Höhe größer als die zweite und dritte Höhe ist.

5. Sägeblatt (1) nach Anspruch 4, **dadurch gekennzeichnet, dass** die erste Höhe zwischen 0,02 mm bis 0,2 mm, insbesondere etwa 0,03 mm, größer als die zweite und dritte Höhe ist.

6. Sägeblatt (1) nach Anspruch 4, **dadurch gekennzeichnet, dass** die zweite und dritte Höhe gleich sind.

7. Sägeblatt (1) nach mindestens einem der vorhergehenden Ansprüche, **dadurch gekennzeichnet, dass** die Gruppe weiterhin einen vierten ungeschränkten gefasten Zahn (10) aufweist, der zwei Fasen besitzt, wobei die Fasen symmetrisch zur Längsmittelebene (9) des Sägeblatts (1) verlaufen.

8. Sägeblatt (1) nach Anspruch 7, **dadurch gekennzeichnet, dass** der erste Zahn (10) eine erste Höhe, der zweite Zahn (10) eine zweite Höhe, der dritte Zahn (10) eine dritte Höhe und der vierte Zahn (10) eine vierte Höhe aufweist, wobei die erste Höhe größer als die zweite und dritte Höhe und die vierte Höhe kleiner als die erste, zweite und dritte Höhe ist.

9. Sägeblatt (1) nach Anspruch 7 oder 8, **dadurch gekennzeichnet, dass** die Gruppe weiterhin die folgenden ungeschränkten gefasten Zähne (10) aufweist:
einen fünften Zahn (10), der zwei Fasen besitzt, die asymmetrisch zur Längsmittelebene (9) des Sägeblatts (1) verlaufen, wobei sich die erste Fase in einer ersten Richtung (15) von der Längsmittelebene (9) erstreckt und einen ersten Fasenwinkel besitzt und sich die zweite Fase in einer anderen zweiten Richtung (16) von der Längsmittelebene (9) erstreckt und einen kleineren zweiten Fasenwinkel besitzt, und
einen sechster Zahn (10), der zwei Fasen besitzt, die asymmetrisch zur Längsmittelebene (9) des Sägeblatts (1) verlaufen, wobei sich die erste Fase in der ersten Richtung (15) von der Längsmittelebene (9) erstreckt und einen ersten Fasenwinkel besitzt und sich die zweite Fase in der anderen zweiten Richtung (16) von der Längsmittelebene (9) erstreckt und einen größeren zweiten Fasenwinkel besitzt.

10. Sägeblatt (1) nach Anspruch 9, **dadurch gekennzeichnet, dass**
der erste Fasenwinkel des fünften Zahns (10) zwischen 15° und 30° liegt,
der zweite Fasenwinkel des fünften Zahns (10) zwischen 5° und 15° liegt,
der erste Fasenwinkel des sechsten Zahns (10) zwischen 5° und 15° liegt,
der zweite Fasenwinkel des sechsten Zahns (10) zwischen 15° und 30° liegt.

11. Sägeblatt (1) nach mindestens einem der vorhergehenden Ansprüche, **dadurch gekennzeichnet, dass** die Schneiden (6) der Zähne (10) jeweils eine Schneidkante aufweisen und die Schneiden (6) mit einer sich über die jeweilige Schneidkante erstreckenden Verschleißschutzschicht versehen sind.

12. Sägeblatt (1) nach Anspruch 11, **dadurch gekennzeichnet, dass** die Verschleißschutzschicht Hartstoff, insbesondere TiN, TiCN, TiAlN, CrN oder DLC, aufweist.

## Claims

1. A saw blade (1) for sawing hollow profiles and/or form profiles, comprising:
a base body (2), and
a plurality of teeth (10) being connected to the base body (2) and each including a cutting portion (6),
the teeth (10) being formed by protrusions (3) being arranged at the base body (2), an insert being connected to each of the protrusions (3), the insert (4) being made of a material which is harder than the material of the protrusions (3) of the base body (2),
at least a part of the teeth (10) being arranged in a group being repeated along the base body (2), the group including at least three unset chamfered teeth (10),
a first tooth (10) in the group including two chamfers, the chamfers extending symmetrically with respect to the longitudinal center plane (9) of the saw blade (1),
a second tooth (10) in the group including two chamfers extending non-symmetrically with respect to the longitudinal center plane (9) of the saw blade (1), the first chamfer extending in a first direction (15) from the longitudinal center plane (9) and having a first chamfer angle, and the second chamfer extending in a different second direction (16) from the longitudinal center plane (9) and having a greater second chamfer angle,
a third tooth (10) in the group including two chamfers extending non-symmetrically with respect to the longitudinal center plane (9) of the saw blade (1), the first chamfer extending in the first direction (15) from the longitudinal center plane (9) and having a first chamfer angle, and the second chamfer extending in the different second direction (16) from the longitudinal center plane (9) and having a smaller second chamfer angle,
the first chamfer of the second tooth (10) and the first chamfer of the third tooth (10) ending in a common point in an outward direction as seen in the view of the saw blade (1) from the front, and
the second chamfer of the second tooth (10) and the second chamfer of the third tooth (10) ending in a common point in an outward direction as seen in the view of the saw blade (1) from the front.

2. The saw blade (1) of claim 1, **characterised in that**
the first chamfer angle of the second tooth (10) is between 5° and 25°,
the second chamfer angle of the second tooth (10) is between 20° and 50°,
the first chamfer angle of the third tooth (10) is between 20° and 50°, and
the second chamfer angle of the third tooth (10) is between 5° and 25°.

3. The saw blade (1) of claim 1 or 2, **characterised in that** the first tooth (10) has a chamfer angle between 20° and 60°, especially of approximately 45°.

4. The saw blade (1) of claim 1, **characterised in that** the first tooth (10) has a first height, the second tooth (10) has a second height and the third tooth (10) has a third height, the first height being greater than the second height and the third height.

5. The saw blade (1) of claim 4, **characterised in that** the first height is between 0.02 mm to 0.2 mm, especially approximately 0.03 mm, greater than the second height and the third height.

6. The saw blade (1) of claim 4, **characterised in that** the second height and the third height are identical.

7. The saw blade (1) of at least one of the preceding claims, **characterised in that** the group further includes a fourth unset chamfered tooth (10) including two chamfers, the chamfers extending symmetrically with respect to the longitudinal center plane (9) of the saw blade (1).

8. The saw blade (1) of claim 7, **characterised in that** the first tooth (10) has a first height, the second tooth (10) has a second height, the third tooth (10) has a third height and the fourth tooth (10) has a fourth height, the first height being greater than the second height and the third height, and the fourth height being smaller than the first height, the second height and the third height.

9. The saw blade (1) of claim 7 or 8, **characterised in that** the group further includes the following unset chamfered teeth (10):
a fifth tooth (10) including two chamfers extending non-symmetrically with respect to the longitudinal center plane (9) of the saw blade (1), the first chamfer extending in a first direction (15) from the longitudinal center plane (9) and having a first chamfer angle, and the second chamfer extending in a different second direction (16) from the longitudinal center plane (9) and having a smaller second chamfer angle, and
a sixth tooth (10) including two chamfers extending non-symmetrically with respect to the longitudinal center plane (9) of the saw blade (1), the first chamfer extending in the first direction (15) from the longitudinal center plane (9) and having a first chamfer angle, and the second chamfer extending in a different second direction (16) from the longitudinal center plane (9) and having a greater second chamfer angle.

10. The saw blade (1) of claim 9, **characterised in that**
the first chamfer angle of the fifth tooth (10) is between 15° and 30°,
the second chamfer angle of the fifth tooth (10) is between 5° and 15°,
the first chamfer angle of the sixth tooth (10) is between 5° and 15°,
the second chamfer angle of the sixth tooth (10) is between 15° and 30°.

11. The saw blade (1) of at least one of the preceding claims, **characterised in that** each cutting portion (6) of the teeth (10) includes a cutting edge, and the cutting portions (6) are provided with a wearing protection layer extending over the respective cutting edge.

12. The saw blade (1) of claim 11, **characterised in that** the wearing protection layer includes hard material, especially TiN, TiCN, TiAlN, CrN or DLC.

## Revendications

1. Lame de scie (1) pour le sciage de profilés creux et/ou moulés, avec
un corps de base (2), et
une pluralité de dents (10) raccordées au corps de base (2), avec chacune un tranchant (6),
les dents (10) étant formées par des saillies (3) disposées sur le corps de base, sur lesquelles un insert (4) est fixé, qui est constitué d'un matériau plus dur que le matériau des saillies (3) et du corps de base (2),
au moins une partie des dents (10) étant disposée dans un groupe se répétant le long du corps de base (2), constitué d'au moins trois dents (10) chanfreinées de manière illimitée,
une première dent (10) dans le groupe présente deux chanfreins, les chanfreins étant symétriques par rapport au plan longitudinal central (9) de la lame de scie (1),
une deuxième dent (10) dans le groupe présente deux chanfreins qui sont asymétriques par rapport au plan longitudinal central (9) de la lame de scie (1), le premier chanfrein s'étendant dans une première direction (15) à partir du plan longitudinal central (9) et un présentant un premier angle de chanfrein et le deuxième chanfrein s'étendant dans une autre deuxième direction (16) à partir du plan longitudinal central (9) et présentant un deuxième angle de chanfrein plus important,
une troisième dent (10) dans le groupe présente deux chanfreins, qui sont asymétriques par rapport au plan longitudinal central (9) de la lame de scie (1), le premier chanfrein s'étendant dans la première direction (15) à partir du plan longitudinal central (9) et un premier angle de chanfrein et le deuxième chanfrein s'étendant dans l'autre deuxième direction (16) à partir du plan longitudinal central (9) et présentant un deuxième angle de chanfrein plus petit,
le premier chanfrein de la deuxième dent (10) et le premier chanfrein de la troisième dent (10) se terminant à l'extérieur, du point de vue de la lame de scie (1), de l'avant vers un point commun et
le deuxième chanfrein de la deuxième dent (10) et le deuxième chanfrein de la troisième dent (10) se terminant à l'extérieur, du point de vue de la lame de scie (1), de l'avant vers un point commun.

2. Lame de scie (1) selon la revendication 1, **caractérisée en ce que** le premier angle de chanfrein de la deuxième dent (10) se trouve entre 5° et 25°,
le deuxième angle de chanfrein de la deuxième dent (10) se trouve entre 20° et 50°,
le premier angle de chanfrein de la troisième dent (10) se trouve entre 20° et 50°, et
le deuxième angle de chanfrein de la troisième dent (10) se trouve entre 5° et 25°.

3. Lame de scie (1) selon la revendication 1 ou 2, **caractérisée en ce que** la première dent (10) présente un angle de chanfrein qui se trouve entre 20° et 60°, plus particulièrement à environ 45°.

4. Lame de scie (1) selon la revendication 1, **caractérisée en ce que** la première dent (10) présente une première hauteur, la deuxième dent (10) présente une deuxième hauteur et la troisième dent (10) présente une troisième hauteur, la première hauteur étant supérieure à la deuxième et à la troisième hauteur.

5. Lame de scie (1) selon la revendication 4, **caractérisée en ce que** la première hauteur est entre 0,02 mm et 0,2 mm, plus particulièrement d'environ 0,03 mm, supérieure à la deuxième et à troisième hauteur.

6. Lame de scie (1) selon la revendication 4, **caractérisée en ce que** la deuxième et la troisième hauteur sont égales.

7. Lame de scie (1) selon au moins une des revendications précédentes, **caractérisée en ce que** le groupe comprend en outre une quatrième dent (10) chanfreinée de manière illimitée, qui présente deux chanfreins, les chanfreins étant symétriques par rapport au plan longitudinal central (9) de la lame de scie (1).

8. Lame de scie (1) selon la revendication 7, **caractérisée en ce que** la première dent (10) présente une première hauteur, la deuxième dent (10) présente une deuxième hauteur, la troisième dent (10) présente une troisième hauteur et la quatrième dent (10) présente une quatrième hauteur plus petite que la première, la deuxième et la troisième hauteur.

9. Lame de scie (1) selon la revendication 7 ou 8, **caractérisée en ce que** le groupe comprend en outre les dents (10) chanfreinées de manière illimitée suivantes:
une cinquième dent (10), qui présente deux chanfreins, qui sont asymétriques par rapport au plan longitudinal central (9) de la lame de scie (1), le premier chanfrein s'étendant dans une première direction (15) à partir du plan longitudinal central (9) et présente un premier angle de chanfrein et le deuxième chanfrein s'étendant dans une autre deuxième direction (16) à partir du plan longitudinal central (9) et présente un deuxième angle de chanfrein plus petit, et
une sixième dent (10), qui présente deux chanfreins, qui sont asymétriques par rapport au plan longitudinal central (9) de la lame de scie (1), la premier chanfrein s'étendant dans la première direction (15) à partir du plan longitudinal central (9) et présente un premier angle de chanfrein et le deuxième chanfrein s'étendant dans une autre deuxième direction (16) à partir du plan longitudinal central (9) et présente un deuxième angle de chanfrein plus grand.

10. Lame de scie (1) selon la revendication 9, **caractérisée en ce que**
le premier angle de chanfrein de la cinquième dent (10) se trouve entre 15° et 20°,
le deuxième angle de chanfrein de la cinquième dent (10) se trouve entre 5° et 15°,
le premier angle de chanfrein de la sixième dent (10) entre 5° et 15°,
le deuxième angle de chanfrein de la sixième dent (10) se trouve entre 15° et 30°.

11. Lame de scie (1) selon au moins une des revendications précédentes, **caractérisée en ce que** les tranchants (6) des dents (10) présentent chacun une arête de tranchant et les tranchants (6) sont munis d'une couche de protection contre l'usure s'étendant sur l'arête de tranchant correspondante.

12. Lame de scie (1) selon la revendication 11, **caractérisée en ce que** la couche de protection contre l'usure comprend un matériau dur, plus particulièrement du TiN, TiCN, TiAlN, CrN ou du DLC.
